(19) **Europäisches Patentamt**
**European Patent Office**
**Office européen des brevets**

(11) **EP 2 743 866 B1**

(12) **EUROPÄISCHE PATENTSCHRIFT**

(45) Veröffentlichungstag und Bekanntmachung des Hinweises auf die Patenterteilung:
**27.07.2016   Patentblatt 2016/30**

(51) Int Cl.:
***G06N 3/10*** *(2006.01)*

(21) Anmeldenummer: **12197174.1**

(22) Anmeldetag: **14.12.2012**

(54) **Verfahren zur Bestimmung des Alterungsverhaltens eines Materials**

Method for determining the ageing behaviour of a material

Procédé de détermination du comportement d'usure d'un matériau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.06.2014   Patentblatt 2014/25**

(73) Patentinhaber: **UL LLC**
**Northbrook, IL 60062 (US)**

(72) Erfinder:
• **Sarabi, Bahman**
**47800 Krefeld (DE)**
• **Wende, Andreas**
**40468 Düsseldorf (DE)**

(74) Vertreter: **Richardt Patentanwälte PartG mbB**
**Wilhelmstraße 7**
**65185 Wiesbaden (DE)**

(56) Entgegenhaltungen:
**EP-A2- 1 253 492**

• **RAMTEKE P K ET AL: "Thermal ageing predictions of polymeric insulation cables from Arrhenius plot using short-term test values", RELIABILITY, SAFETY AND HAZARD (ICRESH), 2010 2ND INTERNATIONAL CONFERENCE ON, IEEE, 14. Dezember 2010 (2010-12-14), Seiten 325-328, XP031871573, DOI: 10.1109/ICRESH.2010.5779569 ISBN: 978-1-4244-8344-0**
• **H.A.B.TE BRAAKE ET AL: "Semi-mechanistic modeling of chemical processes with neural networks", ENGINEERING APPLICATIONS OF ARTIFICIAL INTELLIGENCE, Bd. 11, Nr. 4, 1. August 1998 (1998-08-01) , Seiten 507-515, XP055058888, ISSN: 0952-1976, DOI: 10.1016/S0952-1976(98)00011-6**
• **HONG-YING LI ET AL: "A comparative study on modified ZerilliArmstrong, Arrhenius-type and artificial neural network models to predict high-temperature deformation behavior in T24 steel", MATERIALS SCIENCE AND ENGINEERING A: STRUCTURAL MATERIALS:PROPERTIES, MICROSTRUCTURE & PROCESSING, LAUSANNE, CH, Bd. 536, 29. Dezember 2011 (2011-12-29), Seiten 216-222, XP028397713, ISSN: 0921-5093, DOI: 10.1016/J.MSEA.2011.12.108 [gefunden am 2012-01-08]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 743 866 B1

**Beschreibung**

Die Erfindung betrifft ein Verfahren zur Bestimmung des Alterungsverhaltens eines Materials, ein entsprechendes Computerprogrammprodukt und ein System zur Bestimmung des Alterungsverhaltens eines Materials.

Die Bestimmung des Verhaltens von Materialien nach einer bestimmten Lagerung ist von wichtiger Bedeutung. Zum Beispiel könnte im Automobilsektor von Interesse sein, wie das Energieabsorptionsverhalten eines Stoßfängers ist, nachdem der Stoßfänger über einen Zeitraum von mehreren Jahren Umwelteinflüssen ausgesetzt war. Viele Materialien werden im Laufe der Zeit zum Beispiel spröde, sodass ein ursprünglich elastisch reversibel biegsames Material nach einer bestimmten Zeit nicht mehr in der Lage ist, Biegekräfte aufzunehmen. Stattdessen bricht das Material.

Um nun das Alterungsverhalten von Materialien insbesondere bezüglich der mechanischen Eigenschaften zu beschreiben, hat sich hierzu die Verwendung des sogenannten relativen Temperaturindex (RTI) eingebürgert. Der RTI ist im internationalen Standard CEI IEC 60216-1 wie folgt definiert: Der RTI wird als die Temperatur definiert, nach der es für einen Werkstoff bei Lagerung in Luft genauso lange wie bei einem vergleichbaren anderen Werkstoff bei dessen bereits bekannter RTI-Temperatur dauert, bis eine spezifizierte Eigenschaft auf 50 % ihres ursprünglichen Werts abgefallen ist. In anderen Worten wird zunächst ein Referenzmaterial definiert, bei welchem bekannt ist, nach welcher Zeitdauer dieses Material 50 % einer vorbestimmten physikalischen Eigenschaft wie zum Beispiel einer Durchschlagfestigkeit, einer Zugfestigkeit oder einer Schlagfestigkeit verloren hat. Für andere Werkstoffe, die mit diesem Referenzwerkstoff verglichen werden sollen, wird dann die Temperatur bestimmt, bei der es genau so lange dauert, wie beim Referenzmaterial, bis das neue Material ebenfalls 50 % der besagten mechanischen Eigenschaft verloren hat.

Hierzu werden beispielsweise Normkörper des zu prüfenden Werkstoffs oder Materials hergestellt und dann ohne mechanische Belastung bei einer bestimmten Temperatur gelagert. Nach verschiedenen Zeiten werden die Normkörper entnommen und dann nach Abkühlung einem mechanischen Test unterzogen, um zum Beispiel die Zugfestigkeit bzw. die relative Zugfestigkeit "relative tensile strength" (RTS) in Prozent der mechanischen Belastbarkeit im Vergleich zu vor dem Beginn der temperierten Lagerung zu bestimmen. Ziel ist hierbei üblicherweise, bei einer gegebenen Temperatur jene Lagedauer zu finden, bei der der RTS 50 % beträgt.

Mithilfe der für verschiedene Lagertemperaturen gewonnenen 50 %-Werte lässt sich dann ein Arrhenius-Diagramm erstellen, um durch Extrapolation die Temperatur zu ermitteln, bei der zum Beispiel nach 60000 Stunden der 50 %-Wert für das zu prüfende Material erreicht ist. Diese 60000 Stunden sind in diesem Fall zum Beispiel jene Lagerdauer, welche zur Bestimmung des RTI für den Referenzwerkstoff verwendet wird. Die aus dem Arrhenius-Diagramm extrapolierte Temperatur ist also der RTI in Bezug auf ein Referenzmaterial, für welches die Lagertemperatur bekannt ist, für die nach 60000 Stunden Lagerung der 50 %-Wert für die mechanische Belastbarkeit erreicht ist.

Insgesamt ist es also möglich, durch Bestimmung des RTS für verschiedene Temperaturen letztlich den RTI dieses Materials und damit ein Maß für das Alterungsverhalten dieses Materials zu bestimmen.

Ramteke P K et al "Thermal ageing predictions of polymeric insulation cables from 'Arrhenius plot using short-term test values", Reliability, Safety and Hazard (ICRESH), 20010 2nd international conference on, IEEE, 14. Dezember 2010, Seiten 325-328 beschreibt die Verwendung eines Arrhenius Modells, um Alterungseffekte von Systemkomponenten wie Kabeln zu bestimmen.

H.A.B. te BRAAKE et al "Semi-mechanistic modeling of chemical processes with neural networks, Engineering Applications of Artificial Intelligence, Bd. 11, Nr. 4, 1. August 1998, Seiten 507-515 diskutiert Modellierungstechniken, um allgemein chemische Prozesse zu beschreiben. Hierbei kommen Neuronale Netzwerke zur Sprache.

Der Erfindung liegt die Aufgabe zugrunde, ein verbessertes Verfahren zur Bestimmung des Alterungsverhaltens eines Materials, ein Computerprogrammprodukt und ein verbessertes System zur Bestimmung des Alterungsverhaltens eines Materials zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Bestimmung des Alterungsverhaltens eines Materials geschaffen, wobei das Alterungsverhalten durch Parameter beschrieben wird, wobei die Parameter eine physikalische Prüfeigenschaft des Materials, eine Lagertemperatur und einen Lagerzeitraum des Materials umfassen, wobei die physikalische Prüfeigenschaft des Materials bei der Lagertemperatur und dem Lagerzeitraum angegeben ist, wobei das Verfahren umfasst:

- Verarbeiten eines ersten Teils der Parameter durch ein neuronales Netzwerk zum Erhalt eines Ergebnisses,

- Verarbeiten des Ergebnisses in einem Arrhenius-Modell zum Erhalt eines Prognosewerts, wobei der Prognosewert einem der Parameter entspricht, welcher nicht in das neuronale Netzwerk eingegeben wurde.

Ausführungsformen der Erfindung könnten den Vorteil haben, dass nach entsprechendem Training des neuronalen Netzwerks mit gemessenen Werten für den RTS, die Lagertemperatur und den Lagerzeitraum für anschließend beliebige Werte von RTS, Lagertemperatur und Lagerzeitraum das Alterungsverhalten des Materials bestimmt werden kann. Beispielsweise könnte dem neuronalen Netzwerk und dem Arrhenius-Modell als Parameter lediglich der RTS und die Lagertemperatur zugeführt werden, woraus sich nach entsprechender Berechnung durch das Arrhenius-Modell der zugehörige Lagerzeitraum ergibt. Von Vorteil ist hier, dass durch die Verwendung eines hybriden neuronalen Netzwerks, das heißt einer Kombination eines neuronalen Netzwerks mit einer analytischen Komponente (dem Arrhenius-Modell) auch Vorhersagen für Parameterbereiche gemacht werden können, für welche das neuronale Netzwerk überhaupt nicht trainiert wurde, das heißt für welche das neuronale Netzwerk nicht mit Messdaten versorgt wurde. Der Grund liegt darin, dass ein reines neuronales Netzwerk nicht extrapolieren kann.

Ausführungsformen der Erfindung könnten also ermöglichen, für nahezu beliebige Wertebereiche von Parametern Vorhersagen bezüglich des Alterungsverhaltens eines Materials zu treffen, ohne dass hierzu sich über den gesamten Wertebereich der Parameter erstreckende reale Messverfahren erforderlich wären. Anstatt sich also bei der Bestimmung des Alterungsverhaltens des Materials auf z.B. den üblichen 50 %-Wert für die mechanische Belastbarkeit bei der Angabe des RTI zu beschränken, ist es nun auch möglich, ohne vorherige Messung einen 80 %-Wert des RTS zu verwenden oder einen 30 %-Wert des RTI zu verwenden.

Höhere Werte des RTS könnten insbesondere bei solchen Materialien von hoher Relevanz sein, welche an sicherheitskritischen Punkten eingesetzt werden. So ist es beispielsweise denkbar, ein und dasselbe Material an verschiedenen Punkten eines Kraftfahrzeugs einzusetzen, zum Beispiel sowohl am Stoßfänger als auch an einer Kraftfahrzeuginnenverkleidung. Da es für den Stoßfänger wesentlich kritischer ist, wenn das Material seine mechanischen Eigenschaften über einen längeren Zeitraum einbüßt, könnte für Stoßfänger der 80 %-Wert des RTI verwendet werden, wohingegen für die Kraftfahrzeuginnenverkleidungsteile ein 20 %-Wert des RTI verwendet werden könnte. Nichtsdestotrotz ist entsprechend den Ausführungsformen der Erfindung ausreichend, wenn eine einmalige reale Messdatenerfassung bezüglich 50 % des RTS und damit 50 % des RTI durchgeführt wurde, das neuronale Netzwerk mit diesen Daten trainiert wurde und anschließend das obige Verfahren zur Bestimmung des Alterungsverhaltens durchgeführt wurde.

An dieser Stelle sei angemerkt, dass im Rahmen der Erfindung das Training des neuronalen Netzwerks dieselben Schritte umfassen kann wie die Bestimmung des Alterungsverhaltens des Materials. Beim Training des neuronalen Netzwerks müssen also die Trainingsdaten ebenso dem neuronalen Netzwerk zugeführt werden (Verarbeiten eines ersten Teils der Parameter einem neuronalen Netzwerk zum Erhalt eines Ergebnisses) und anschließend das Ergebnis einem Arrhenius-Modell zum Erhalt des Prognosewerts zugeführt werden, wobei der Prognosewert einem der Parameter entspricht, welcher nicht in das neuronale Netzwerk eingegeben wurde. Hybridmodellierung und das Training von hybriden neuronalen Netzwerken ist aus dem Stand der Technik beispielsweise aus H. A. B. Braake, H. J. L. van Can, H. B. Verbruggen, Semi-mechanistic modelling of chemical processes with neural networks, Eng. Appl. Art. Intell. 11, (1998), pp. 507 - 515 und A. Schuppert, Extrapolarity of structured hybrid models: A key to optimization of complex processes, in: Proceedings of EquaDiff '99, B. Fiedler, K. Gröger, J. Sprekels Eds., (2000), pp. 1135 - 1151 bekannt.

Erfindungsgemäß wird der erste Teil der Parameter ausschließlich dem neuronalen Netzwerk zugeführt und ein zweiter Teil der Parameter wird zusammen mit dem Ergebnis dem Arrhenius-Modell zugeführt. Vorzugsweise unterscheidet sich der erste Teil von dem zweiten Teil. Damit muss also das neuronale Netzwerk nicht mit sämtlichen Parametern betrieben werden, sondern es genügt, hierzu lediglich einen Teil der Parameter zu verwenden und die übrigen Parameter statt dem neuronalen Netzwerk dem Arrhenius-Modell zuzuführen. Das Arrhenius-Modell verarbeitet also neben dem Ergebnis des neuronalen Netzwerks auch noch den zweiten Teil der Parameter. Da es sich bei dem Arrhenius-Modell um ein analytisches Modell handelt, welches in exakter Weise die für Alterungsprozesse genutzte Arrhenius-Gleichung implementiert, wird dadurch das Gesamtverfahren zur Bestimmung des Alterungsverhaltens von Materialien auf der einen Seite vereinfacht und auf der anderen Seite bezüglich der Genauigkeit verfeinert. Außerdem ergibt sich hier ein Geschwindigkeitsgewinn, da nicht das "komplizierte" neuronale Netzwerk zur Berücksichtigung einer Vielzahl von Parametern Verwendung finden muss.

Nach einer Ausführungsform der Erfindung umfasst das neuronale Netzwerk ein erstes neuronales Netzwerk und ein zweites neuronales Netzwerk, wobei der erste Teil der Parameter eine erste Menge und eine zweite Menge der Parameter umfasst, wobei das Verarbeiten des ersten Teils der Parameter durch das neuronale Netzwerk ein Verarbeiten der ersten Menge der Parameter durch das erste neuronale Netzwerk zum Erhalt eines ersten Ergebnisses und ein Verarbeiten der zweiten Menge der Parameter durch das zweite neuronale Netzwerk zum Erhalt eines zweiten Ergebnisses umfasst, wobei das Zuführen des Ergebnisses dem Arrhenius-Modell ein Zuführen des ersten Ergebnisses und des zweiten Ergebnisses in dem Arrhenius-Modell umfasst, wobei das erste Ergebnis und das zweite Ergebnis unterschiedlichen Termen und/oder Variablen des Arrhenius-Modells zugeführt werden.

Zum Beispiel könnte für jeden Koeffizient des Arrhenius-Modells ein eigenes neuronales Netzwerk zum Einsatz kommen, sodass die Genauigkeit der Bestimmung des Alterungsverhaltens weiter erhöht wird.

Es wird also vereinfacht gesprochen ermöglicht, dass jeder Koeffizient des Arrhenius-Modells für sich simuliert und berechnet wird. Jedoch ist es auch möglich, dass die Verarbeitung durch die unterschiedlichen neuronalen Netzwerke auch auf einzelne Termen oder Variablen des ArrheniusModells beschränkt werden.

Nach einer Ausführungsform der Erfindung entspricht die erste Menge der Parameter der zweiten Menge der Parameter.

Nach einer Ausführungsform der Erfindung wird zumindest einer der Terme und/oder Variablen und/oder Koeffizienten des Arrhenius-Modells konstant gehalten. Dies könnte insbesondere für eine gegebene feste Materialzusammensetzung des oben beschriebenen Normkörpers verwendet werden, was das Berechnungsverfahren weiter beschleunigt. Zum Beispiel könnte es genügen, dass im Falle des Einsatzes zweier neuronaler Netzwerke zunächst ein Training der neuronalen Netzwerke durchgeführt wird, wobei eines der neuronalen Netzwerke im Rahmen des Trainings jenen Koeffizient des Arrhenius-Modells liefert, welcher anschließend konstant gehalten wird. Dies bedeutet, dass bei der eigentlichen Bestimmung des Alterungsverhaltens des Materials später dieses besagte neuronale Netzwerk nicht mehr verwendet werden muss. Zum Training werden also zwei neuronale Netzwerke eingesetzt und zur Bestimmung des eigentlichen Alterungsverhaltens im Rahmen der Verarbeitung später nur noch ein neuronales Netzwerk.

Nach einer Ausführungsform der Erfindung handelt es sich bei dem Material um einen Probenkörper, wobei die Parameter ferner eine Dicke des Probenkörpers umfassen, wobei die relative Zugfestigkeit ferner bei der Dicke angegeben ist. Ausführungsformen der Erfindung könnten also eine Bestimmung des Alterungsverhaltens eines Materials umfassen, welches abhängig ist sowohl von der Lagerdauer, der Lagertemperatur als auch der Dicke des Materials.

Nach einer weiteren Ausführungsform der Erfindung umfassen die Parameter ferner eine Prüftemperatur des Materials, bei welcher die relative Zugfestigkeit bestimmt wurde, wobei die relative Zugfestigkeit ferner bei der Prüftemperatur angegeben ist.

Nach einer Ausführungsform der Erfindung umfasst die erste Menge der Parameter die relative Zugfestigkeit und die Dicke des Probenkörpers und der zweite Teil der Parameter umfasst die Lagertemperatur. Zum Beispiel könnte also das ArrheniusModell eine Berechnungsvorschrift der Formel $\frac{A + B}{T} = ln(t)$ umfassen, wobei T der Parameter Lagertemperatur und t der Parameter Lagerzeit ist. In diesem Fall könnte A das Ergebnis der ersten Verarbeitung und B das Ergebnis der zweiten Verarbeitung sein oder A könnte das Ergebnis der Verarbeitung sein in im Falle der Verwendung eines einzelnen Netzwerks und B die Variable sein, welche konstant gehalten wird. Im letzteren Fall sollte jedoch das Training mit zwei neuronalen Netzwerken stattfinden, wobei für die eigentliche Bestimmung des Alterungsverhaltens nur noch jenes neuronales Netzwerk zum Einsatz kommt, welche A liefert.

Nach einer Ausführungsform der Erfindung ist die physikalische Prüfeigenschaft des Materials eine relative Zugfestigkeit oder eine relative Durchschlagfestigkeit oder eine relative Schlagfestigkeit des Materials.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung ein System zur Bestimmung des Alterungsverhaltens eines Materials, wobei das Alterungsverhalten durch Parameter beschrieben wird, wobei die Parameter eine physikalische Prüfeigenschaft des Materials, eine Lagertemperatur und einen Lagerzeitraum des Materials umfassen, wobei die physikalische Prüfeigenschaft bei der Lagertemperatur und dem Lagerzeitraum gegeben ist, wobei das System ein neuronales Netzwerk und ein Arrhenius-Modell umfasst, wobei das System dazu ausgebildet ist:

- einen ersten Teil der Parameter dem neuronalen Netzwerk für den Erhalt eines Ergebnisses zuVerarbeiten,

- das Ergebnis dem Arrhenius-Modell zum Erhalt eines Prognosewerts zuzuführen, wobei der Prognosewert einem der Parameter entspricht, welcher nicht in das neuronale Netzwerk eingegeben wurde.

Im Folgenden werden bevorzugte Ausführungsformen der Erfindung anhand der Zeichnungen näher erläutert. Es zeigen:

Figur 1    ein Diagramm, welches den RTS in Abhängigkeit von einer Lagerdauer angibt,

Figur 2    ein Arrhenius-Diagramm,

Figur 3    ein weiteres abhängiges Diagramm,

Figur 4    ein System zur Bestimmung des Alterungsverhaltens eines Materials,

Figur 5    einen Vergleich von gemessenen RTS-Werten bei bestimmten Lagerdauern mit entsprechenden simulierten Werten.

Im Folgenden sei ohne Beschränkung der Allgemeinheit davon ausgegangen, dass eine relative Zugfestigkeit (RTS) betrachtet wird. Nichtsdestotrotz ist es auch möglich, stattdessen eine Durchschlagfestigkeit oder eine Schlagfestigkeit zur Bestimmung des Alterungsverhaltens heranzuziehen. Es kann stattdessen eine elektrische Leitfähigkeit oder eine Kerbschlagfähigkeit verwendet werden.

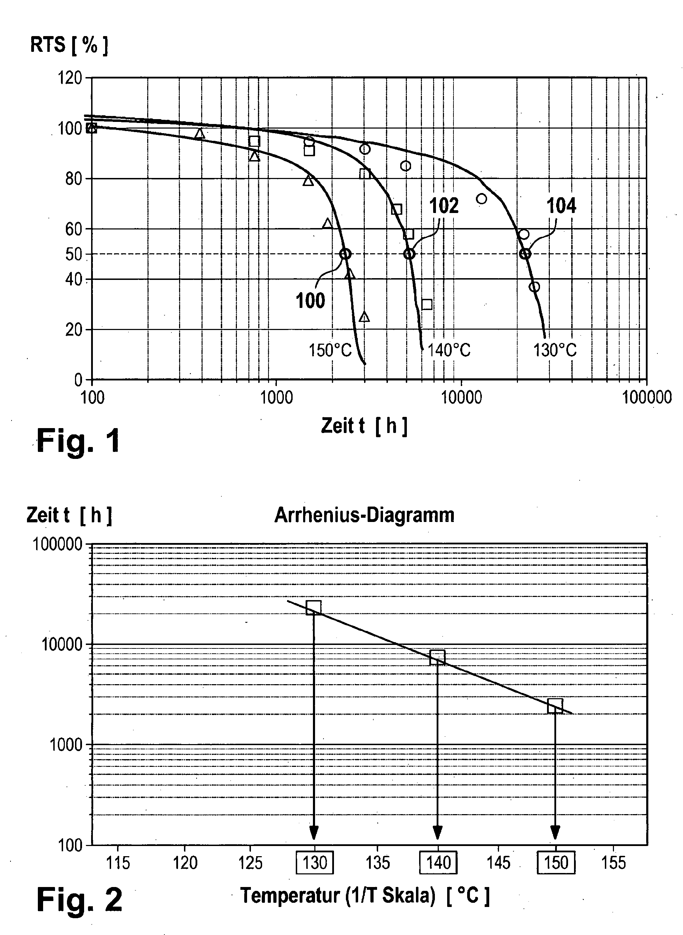

Die Figur 1 zeigt ein Messdiagramm des RTS eines bestimmten Materials bei drei verschiedenen Temperaturen, nämlich 130°, 140° und 150°C. Aufgetragen ist auf der Abszisse der RTS in Prozent und auf der Ordinate die Lagerzeit in Stunden. Das typische Materialverhalten ist dabei, dass zu Beginn der Lagerdauer der RTS, z.B. die Zugfestigkeit des Materials in Vergleich zu ihrer anfänglichen Zugfestigkeit vor Beginn der Lagerung, unverändert ist, das heißt der RTS einen Wert von 100 % aufweist. Nach einer gewissen Lagerzeit jedoch nimmt die Zugfestigkeit ab, sodass nach einem bestimmten Zeitraum in Abhängigkeit von der Lagertemperatur der RTS abgesunken ist.

Von Interesse ist nun üblicherweise jene Lagerungszeit, bei welcher der RTS 50 % beträgt, also bei welcher die Zugfestigkeit des Materials auf 50 % ihres ursprünglichen Werts abgefallen ist. Im Falle der Lagerung des Materials bei 130° ergibt sich der Schnittpunkt 104 in Figur 1, das heißt eine Lagerdauer im Bereich von 25000 Stunden. Im Falle einer Lagertemperatur von 140° wird diese Lagerdauer auf einen Wert von 5500 Stunden reduziert (Schnittpunkt 102) und im Falle einer Lagertemperatur von 150° wird die entsprechende Lagerdauer auf einen Wert von 2500 Stunden reduziert.

Trägt man nun diese Zeitdauern in Abhängigkeit von der Temperatur auf, so ergibt sich ein linearer Zusammenhang, wie er in dem Arrhenius-Diagramm in Figur 2 dargestellt ist.

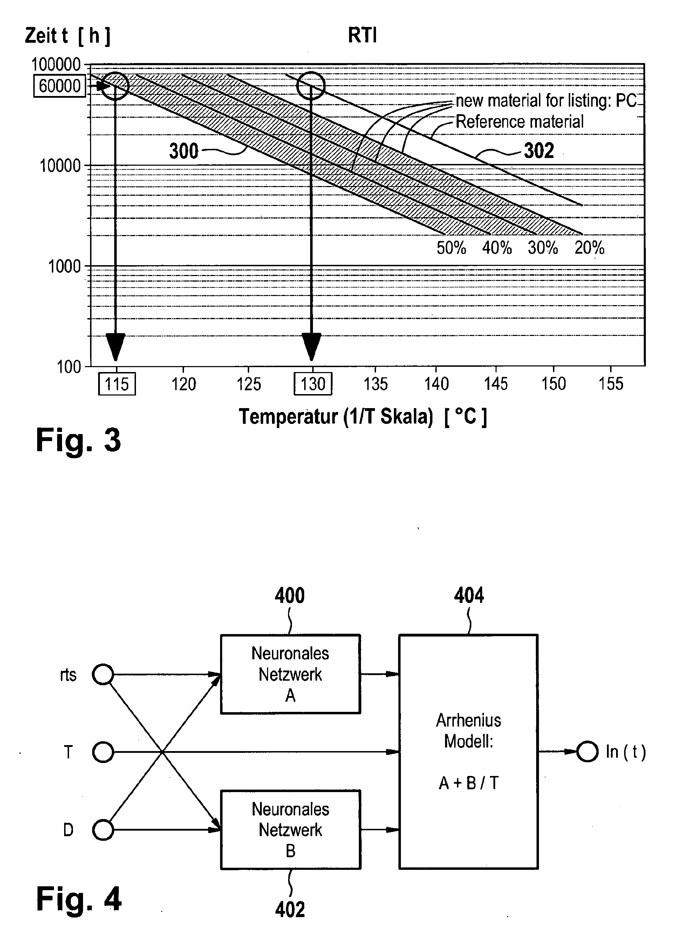

Durch Extrapolation der in Figur 2 gezeigten Messpunkte kann nun beispielsweise jene Temperatur ermittelt werden, nach welcher nach 60000 Stunden der 50 %-Wert für das zu prüfende Material erreicht ist. Dies ist beispielhaft in Figur 3 gezeigt. In dem Beispiel der Figur 3 wurde für ein neues Material als Temperatur 115°C ermittelt, bei welcher das Material über einen Zeitraum von 60000 Stunden gelagert werden kann, wobei nach diesen 60000 Stunden Lagerung bei 115° die mechanische Belastbarkeit (der RTS) um 50 % im Vergleich zu vor Beginn der temperierten Lagerung abgefallen ist (Gerade 300).

Ebenfalls gezeigt in Figur 3 ist für ein Referenzmaterial 302 jenes Arrhenius-Diagramm (Gerade 302), aus welchem ermittelbar ist, dass bezüglich des Referenzmaterials die mechanische Belastbarkeit um 50 % des ursprünglichen Werts dann abgefallen ist, wenn das Material bei 60000 Stunden bei einer Temperatur von 130°C gelagert wurde. Die Messung bezüglich des Referenzmaterials (Gerade 302) wurde dabei ebenfalls für einen 50 %-RTS durchgeführt. Im Beispiel der Figur 3 beträgt also der RTI des Materials mit der Geraden 300 einen Wert von 115°C.

Zusammengefasst ergibt sich also in der Figur 3 für das Referenzmaterial ein Temperaturindex (TI) von 130°, wenn als gewählte Zeitspanne 60000 Stunden angenommen wird. Als relativer Temperaturindex RTI ergibt sich für das Prüfmaterial ein Wert von 115°C, also ein Temperaturindex des Prüfmaterials für diejenige Zeitspanne, die zum bekannten Temperaturindex des Referenzmaterials gehört, wenn beide Materialien im selben Alterungs- und Beurteilungsverfahren in einem Vergleichsverfahren unterworfen werden.

In der Figur 3 wurden lediglich die Geraden 300 und 302 jeweils für einen 50 %-Wert des RTS ermittelt. Entsprechend ist das Ergebnis ein sogenannter 50 % RTI-Wert. Wenn nun beispielsweise ein 20 %- oder 40 %-RTI-Wert gewünscht ist, würde dies entsprechend die zugehörigen Geraden in der Figur 3 erfordern. Dies wiederum würde die Durchführung der Messungen, wie im Diagramm in Figur 1 gezeigt, erfordern, und zwar für verschiedene Temperaturen und verschiedene Zeiträume. Dies ist ein zeitintensiver Prozess, der beispielsweise durch das obig beschriebene Verfahren zur Bestimmung des Alterungsverhaltens eines Materials umgangen werden könnte. Hierzu könnte ein System zum Einsatz kommen, wie es in Figur 4 gezeigt ist.

Figur 4 zeigt ein System zur Bestimmung des Alterungsverhaltens eines Materials, wobei das Alterungsverhalten des Materials durch einen RTS, eine Temperatur T und eine Dicke des Materials D sowie einen Lagerzeitraum t beschrieben wird.

Das System besteht aus zwei neuronalen Netzwerken 400 und 402, welche jeweils als Parameter RTS und D empfangen. Durch das neuronale Netzwerk 400 wird der Prognosewert A simuliert und durch das neuronale Netzwerk 402 wird der Prognosewert B simuliert. Die Prognosewerte A und B bilden dabei Koeffizienten des Arrhenius-Modells 404. Das Arrhenius-Modell 404 enthält eine Rechenvorschrift der Form

$$ln(t) = \frac{A + B}{T}.$$ Die Temperatur T geht dabei direkt und ohne Umwege in das Arrhenius-Modell ein, findet also keinen Eingang in die neuronale Netzwerke 400 und 402.

Es sei angemerkt, dass das System der Figur 4 lediglich beispielhaft ist und beispielsweise auch auf die Verwendung des neuronalen Netzwerks 402 verzichtet werden kann, wenn der Parameter B für eine gegebene zu prüfende Materialzusammensetzung bekannt ist. Der Grund liegt darin, dass gefunden wurde, dass der Koeffizient B bei gegebener Materialzusammensetzung nahezu konstant ist, also Unabhängig von RTS, T und G. Es genügt also, einmalig die neuronalen Netzwerke 400 und 402 mit den Werten von RTS und B zu trainieren, deren Ausgaben A und B dem Arrhenius-Modell im Rahmen des Trainings zuzuführen und das Ergebnis des Arrhenius-Modells im Rahmen des üblichen Trainings von hybriden neuronalen Netzwerken für eine Gewichtung der Koeffizienten der neuronalen Netzwerke 400 und 402 zu verwenden.

Nicht gezeigt in Figur 4 ist die Möglichkeit, die neuronalen Netzwerke 400 und/oder 402 mit weiteren Parametern zu versorgen, welche zum Beispiel die Prüfbedingungen des Materials widerspiegeln. Dies könnte beispielsweise eine Temperatur sein, bei welcher die Prüfung des Materials zur Ermittlung der RTS durchgeführt wird.

Zusammengefasst werden also in Figur 4 die folgenden Schritte durchgeführt:

1. Bestimmung des RTS bei verschiedenen Lagertemperaturen, Lagerzeiträumen und für verschiedene Dicken des zu prüfenden Materials.

2. Trainieren der neuronalen Netzwerke 400 und 402, wobei den neuronalen Netzwerken 400 und 402 ausschließlich RTS und D zugeführt werden und die durch die neuronalen Netzwerke 400 und 402 gelieferten Koeffizienten A und B dem Arrhenius-Modell 404 zugeführt werden. Ferner wird dem Arrhenius-Modell 404 die Lagertemperatur T zugeführt. Das Arrhenius-Modell wird als Ergebnis ln(t), also der natürliche Logarithmus der Lagerdauer.

3. Optionale Überprüfung, ob der Koeffizient B konstant und unabhängig von RTS, T und D ist.

4. Nach Abschluss des in den Schritten 1-3 durchgeführten Trainings, Bestimmung des Zusammenhangs zwischen RTS und t für verschiedene Temperaturen und gegebenenfalls für verschiedene Materialdicken unter Verwendung des neuronalen Netzwerks 400 und des Arrhenius-Modells 404 sowie des konstanten Koeffizienten B oder alternativ, wenn der Koeffizient B nicht konstant ist, des neuronalen Netzwerks 402.

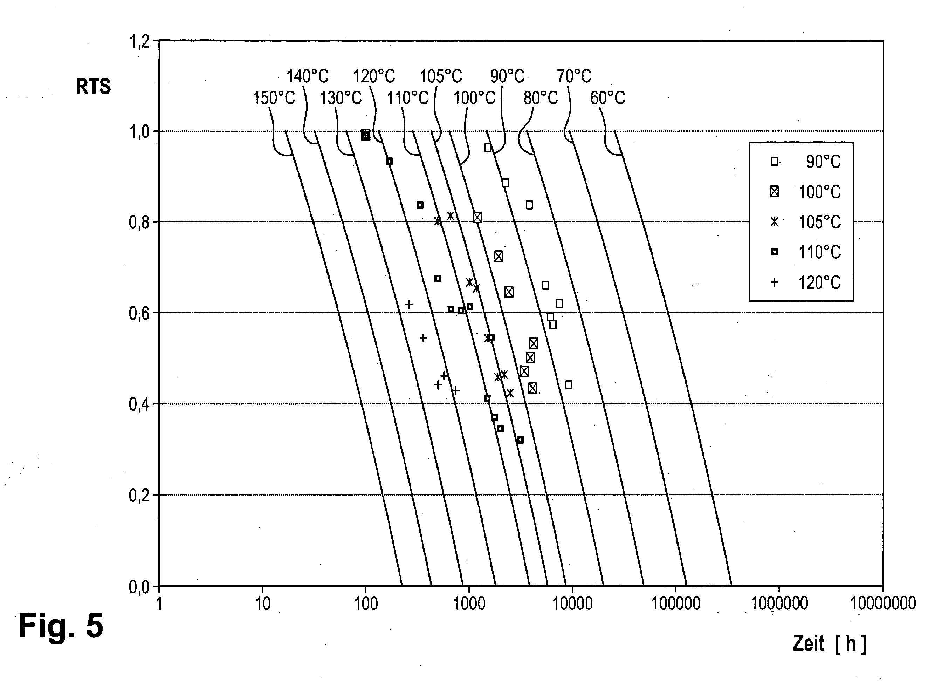

Das Resultat ist in Figur 5 gezeigt. Figur 5 zeigt ein RTS-Zeitdiagramm, bei welchem verschiedene Berechnungskurven für verschiedene Lagertemperaturen gezeigt sind. Diese Kurven wurden unter Verwendung des in Figur 4 erläuterten Systems gewonnen. Ferner ersichtlich sind in Figur 5 verschiedene reale Messpunkte, welche bei unterschiedlichen Temperaturen experimentell gewonnen wurden. Wie deutlich sichtbar ist, stimmen die Lagen der Kurven und der gemessenen Datenpunkte bei einer gegebenen Temperatur gut überein. Daraus kann geschlossen werden, dass das beschriebene System und Verfahren zur Alterungsbestimmung von Materialien in präziser Weise arbeitet.

**Patentansprüche**

1. Computerimplementiertes Verfahren zur Bestimmung des Alterungsverhaltens eines Materials, wobei das Alterungsverhalten durch Parameter beschrieben wird, wobei die Parameter eine physikalische Prüfeigenschaft des Materials, eine Lagertemperatur und einen Lagerzeitraum des Materials umfassen, wobei die physikalische Prüfeigenschaft bei der Lagertemperatur und dem Lagerzeitraum angegeben ist, wobei das Verfahren umfasst:

- Verarbeiten eines ersten Teils der Parameter durch ein neuronales Netzwerk (400; 402) zum Erhalt eines Ergebnisses,
- Zuführen des Ergebnisses einem Arrhenius Modell (404) zum Erhalt eines Prognosewerts, wobei der Prognosewert einem der Parameter entspricht, welcher nicht in das neuronale Netzwerk eingegeben wurde, wobei der erste Teil der Parameter ausschließlich dem neuronalen Netzwerk (400; 402) zugeführt wird und ein zweiter Teil der Parameter zusammen mit dem Ergebnis dem Arrhenius Modell (404) zugeführt wird.

2. Verfahren nach Anspruch 1, wobei sich der erste Teil von dem zweiten Teil unterscheidet.

3. Verfahren nach einem der Ansprüche 1-2, wobei das neuronale Netzwerk (400; 402) ein erstes neuronales Netzwerk (400) und ein zweites neuronales Netzwerk (402) umfasst, wobei der erste Teil der Parameter einen erste Menge und eine zweite Menge der Parameter umfasst, wobei das Verarbeiten des ersten Teils der Parameter durch das neuronale Netzwerk ein Verarbeiten der ersten Menge der Parameter durch das erste neuronale Netzwerk (400) zum Erhalt eines ersten Ergebnisses und ein Verarbeiten der zweiten Menge der Parameter durch das zweite neuronale Netzwerk (402) zum Erhalt eines zweiten Ergebnisses umfasst, wobei das Zuführen des Ergebnisses dem Arrhenius Modell (404) ein Zuführen des ersten Ergebnisses und des zweiten Ergebnisses dem Arrhenius Modell (404) umfasst, wobei das erste Ergebnis und das zweite Ergebnis unterschiedlichen Koeffizienten und/oder Termen und/oder Variablen des Arrhenius-Modells (404) zugeführt werden.

4. Verfahren nach Anspruch 3, wobei die erste Menge der Parameter der zweiten Menge der Parameter entspricht.

5. Verfahren nach einem der vorigen Ansprüche, wobei zumindest einer der Terme und/oder Variablen und/oder Koeffizienten des Arrhenius-Modells (404) konstant gehalten wird.

6. Verfahren nach Anspruch 5, wobei der zumindest einer der Terme und/oder Variablen und/oder Koeffizienten des Arrhenius-Modells (404) für eine gegebene Materialzusammensetzung konstant gehalten wird.

7. Verfahren nach einem der vorigen Ansprüche, wobei es sich bei dem Material um einen Probenkörper handelt, wobei die Parameter ferner eine Dicke des Probenkörpers umfassen, wobei die physikalische Prüfeigenschaft ferner bei der Dicke angegeben ist.

**8.** Verfahren nach einem der vorigen Ansprüche, wobei die Parameter ferner eine Prüftemperatur des Materials umfassen, bei welcher die physikalische Prüfeigenschaft bestimmt wurde, wobei die physikalische Prüfeigenschaft ferner bei der Prüftemperatur angegeben ist.

**9.** Verfahren nach einem der vorigen Ansprüche 7-8, wobei die erste Menge der Parameter die physikalische Prüfeigenschaft und die Dicke des Probenkörpers umfassen und wobei der zweite Teil der Parameter die Lagertemperatur umfasst.

**10.** Verfahren nach Anspruch 9, wobei das Arrhenius-Modell (404) eine Berechnungsvorschrift A+B/T=ln(t) umfasst, wobei T der Parameter Lagertemperatur und t der Parameter Lagerzeit ist,

- wobei A das erste Ergebnis und B das zweite Ergebnis ist, oder
- wobei A das Ergebnis ist und B die Variable ist, welche konstant gehalten wird.

**11.** Verfahren nach einem der vorigen Ansprüche, wobei die physikalische Prüfeigenschaft des Materials eine relative Zugfestigkeit oder eine relative Durchschlagfestigkeit oder eine relative Schlagfestigkeit des Materials ist.

**12.** Computerprogrammprodukt mit von einem Prozessor ausführba ren Instruktionen zur Durchführung der Verfahrensschritte gemäß einem der vorigen Ansprüche.

**13.** System zur Bestimmung des Alterungsverhaltens eines Materials, wobei das Alterungsverhalten durch Parameter beschrieben wird, wobei die Parameter eine physikalische Prüfeigenschaft des Materials, eine Lagertemperatur und einen Lagerzeitraum des Materials umfassen, wobei die physikalische Prüfeigenschaft bei der Lagertemperatur und dem Lagerzeitraum angegeben ist, wobei das System ein neuronales Netzwerk (400; 402) und ein Arrhenius-Modell (404) umfasst, wobei das System dazu ausgebildet ist:

- einen ersten Teil der Parameter durch das neuronale Netzwerk (400; 402) zum Erhalt eines Ergebnisses zu verarbeiten,
- das Ergebnis dem Arrhenius Modell (404) zum Erhalt eines Prognosewerts zuzuführen, wobei der Prognosewert einem der Parameter entspricht, welcher nicht in das neuronale Netzwerk (400; 402) eingegeben wurde.

den ersten Teil der Parameter ausschließlich dem neuronalen Netzwerk (400; 402) zuzuführen und ein zweiter Teil der Parameter zusammen mit dem Ergebnis dem Arrhenius Modell (404) zuzuführen.

**Claims**

**1.** A computer-implemented method for determining the ageing behaviour of a material, wherein the ageing behaviour is described by parameters, wherein the parameters include a physical test property of the material, a storage temperature, and a storage period of the material, wherein the physical test property is specified at the storage temperature and during the storage period, wherein the method comprises the steps of

- processing a first part of the parameters by a neural network (400; 402) in order to obtain a result,
- supplying the result to an Arrhenius model (404) in order to obtain a prediction value, wherein the prediction value corresponds to one of the parameters not input into the neural network,
wherein the first part of the parameters is supplied exclusively to the neural network (400; 402) and a second part of the parameters is supplied together with the result to the Arrhenius model (404).

**2.** The method according to claim 1, wherein the third part is different from the second part.

**3.** The method according to either one of claims one or 2, wherein the neural network (400; 402) comprises a first neural network (400) and a second neural network (402), wherein the first part of the parameters includes a first amount and a second amount of the parameters, wherein the processing of the first part of the parameters by the neural network comprises a processing of the first amount of the parameters by the first neural network (400) in order to obtain a first result and a processing of the second amount of the parameters by the second neural network (402) in order to obtain a second result, wherein the supplying of the result to the Arrhenius model (404) comprises a supplying of the first results and of the second result to the Arrhenius model (404), wherein the first result and the second result are supplied to different coefficients and/or terms and/or variables of the Arrhenius model (404).

**4.** The method according to claim 3, wherein the first amount of the parameters corresponds to the second amount of the parameters.

**5.** The method according to any one of the preceding claims, wherein at least one of the terms and/or variables and/or coefficients of the Arrhenius model (404) is kept constant.

**6.** Method according to claim 5, wherein the at least one of the terms and/or variables and/or coefficients of the Arrhenius model (404) is kept constant for a given material composition.

**7.** The method according to any one of the preceding claims, wherein the material is a sample body, wherein the parameters also comprise a thickness of the sample body, wherein the physical test property is also specified at the thickness.

**8.** The method according to any one of the preceding claims, wherein the parameters also comprise a test temperature of the material, at which the physical test property was determined, wherein the physical test property is also specified at the test temperature.

**9.** The method according to either one of the preceding claims 7-8, wherein the first amount of the parameters comprises the physical test property and the thickness of the sample body, and wherein the second part of the parameters comprises the storage temperature.

**10.** The method according to claim 9, wherein the Arrhenius model (404) comprises a calculation rule A+B/T=ln(t), wherein T is the parameter constituted by storage temperature and t is the parameter constituted by storage time,

- wherein A is the first result and B is the second result, or
- wherein A is the result and B is the variable that is kept constant.

**11.** The method according to any one of the preceding claims, wherein the physical test property of the material is a relative tensile strength or a relative dielectric strength or a relative impact strength of the material.

**12.** A computer program product having instructions that can be executed by a processor for carrying out the method steps according to any one of the preceding claims.

**13.** A system for determining the ageing behaviour of a material, wherein the ageing behaviour is described by parameters, wherein the parameters include a physical test property of the material, a storage temperature, and a storage period of the material, wherein the physical test property is specified at the storage temperature and during the storage period, wherein the system comprises a neural network (400; 402) and an Arrhenius model (404), wherein the system is designed to

- process a first part of the parameters by the neural network (400; 402) in order to obtain a result,
- supply the result to the Arrhenius model (404) in order to obtain a prediction value, wherein the prediction value corresponds to one of the parameters not input into the neural network (400; 402),

to supply the first part of the parameters exclusively to the neural network (400; 402) and to supply a second part of the parameters together with the result to the Arrhenius model (404).

**Revendications**

**1.** Procédé mis en oeuvre par ordinateur pour la détermination du comportement en vieillissement d'un matériau, où le comportement en vieillissement est décrit par des paramètres, où les paramètres comprennent une propriété physique mesurable du matériau, une température de stockage et une durée de stockage du matériau, où la propriété physique mesurable est indiquée pour la température de stockage et la durée de stockage, où le procédé comprend :

- l'exploitation d'une première partie des paramètres par un réseau neuronal (400 ; 402) pour l'obtention d'un résultat,
- la soumission du résultat à un modèle d'Arrhenius (404) pour l'obtention d'une valeur de probabilité, où la valeur de probabilité correspond à l'un des paramètres, lequel n'a pas été indiqué dans le réseau neuronal,
où la première partie des paramètres est exclusivement ramené vers le réseau neuronal (400 ; 402), et une deuxième partie des paramètres est ramenée ensemble avec le résultat vers le modèle d'Arrhenius.

**2.** Procédé selon la revendication 1, où la première partie se distingue de la deuxième partie.

**3.** Procédé selon l'une des revendications 1 à 2, où le réseau neuronal (400 ; 402) comprend un premier réseau neuronal (400) et un deuxième réseau neuronal (402), où la première partie des paramètres comprend une première fraction et une deuxième fraction des paramètres, où l'exploitation de la première partie des paramètres par le réseau neuronal comprend une exploitation de la première fraction des paramètres par le premier réseau neuronal (400) pour l'obtention d'un premier résultat et une exploitation de la deuxième fraction des paramètres par le deuxième réseau neuronal (402) pour l'obtention d'un deuxième résultat, où l'introduction du résultat du modèle d'Arrhenius (404) comprend une introduction du premier résultat et du deuxième résultat au modèle d'Arrhenius, où des coefficients différents et/ou des termes et/ou des variables du modèle d'Arrhenius sont introduits dans le premier résultat et le deuxième résultat.

4. Procédé selon la revendication 3, où la première fraction de paramètres correspond à la deuxième fraction de paramètres.

5. Procédé selon l'une des revendications précédentes, où au moins l'un des termes, et/ou des variables, et/ ou des coefficients du modèle d'Arrhenius (404), est maintenu constant.

6. Procédé selon la revendication 5, où au moins l'un des termes, et/ou des variables, et/ ou des coefficients du modèle d'Arrhenius (404), est maintenu constant pour une composition de matériau donnée.

7. Procédé selon l'une des revendications précédentes, où il s'agit, dans le cas du matériau, d'un spécimen, où les paramètres comprennent en outre une épaisseur de spécimen, où la propriété physique mesurable est en outre indiquée par l'épaisseur.

8. Procédé selon l'une des revendications précédentes, où les paramètres comprennent en outre une température d'examen du matériau, à laquelle la propriété physique mesurable a été déterminée, où la propriété physique mesurable est indiquée par la température d'examen.

9. Procédé selon l'une des revendications précédentes 7 à 8, où la première fraction des paramètres comprend la propriété physique mesurable et l'épaisseur du spécimen et où la deuxième fraction des paramètres comprend la température de stockage.

10. Procédé selon la revendication 9, où le modèle d'Arrhenius comprend une formule de calcul A + B / T = ln(t), où T est le paramètre température de stockage et t est le paramètre durée de stockage,

    - où A est le premier résultat et B est le deuxième résultat, ou
    - où A est le résultat et B est la variable, lesquels sont maintenus constants.

11. Procédé selon l'une des revendications précédentes, où la propriété physique mesurable du matériau est une résistance à la traction relative ou une rigidité diélectrique relative ou une résistance aux chocs relative du matériau.

12. Résultat d'un programme informatique avec des instructions exécutables par un processeur pour l'exécution des étapes de procédé selon l'une des revendications précédentes.

13. Système pour la détermination du comportement en vieillissement d'un matériau, où le comportement en vieillissement est décrit par des paramètres, où les paramètres comprennent une propriété physique mesurable du matériau, une température de stockage et une durée de stockage du matériau, où la propriété physique mesurable est indiquée pour la la température de stockage et la durée de stockage, où le système comprend un réseau neuronal (400 ; 402) et un modèle d'Arrhenius, où le système est conçu pour :

    - exploiter une première partie des paramètres par le réseau neuronal (400 ; 402) pour l'obtention d'un résultat,
    - introduire le résultat dans le modèle d'Arrhenius (404) pour l'obtention d'une valeur de probabilité, où la valeur de probabilité correspond à l'un des paramètres, lequel n'a pas été indiqué dans le réseau neuronal (400 ; 402),
    attribuer la première partie des paramètres exclusivement au réseau neuronal (400 ; 402) et une deuxième partie des paramètres ensemble avec le résultat au modèle d'Arrhenius (404).

Fig. 1

Fig. 2

**Zeit t [ h ]**                    RTI

new material for listing: PC
Reference material

300

302

50%  40%  30%  20%

**Temperatur (1/T Skala) [ °C ]**

# Fig. 3

rts

T

D

400
Neuronales
Netzwerk
A

402
Neuronales
Netzwerk
B

404
Arrhenius
Modell:

A + B / T

ln ( t )

# Fig. 4

Fig. 5

EP 2 743 866 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Thermal ageing predictions of polymeric insulation cables from ‚Arrhenius plot using short-term test values. **RAMTEKE P K et al.** Reliability, Safety and Hazard (ICRESH), 20010 2nd international conference on. IEEE, 14. Dezember 2010, 325-328
- **H.A.B. TE BRAAKE et al.** Semi-mechanistic modeling of chemical processes with neural networks. *Engineering Applications of Artificial Intelligence,* 01. August 1998, vol. 11 (4), 507-515
- **H. A. B. BRAAKE ; H. J. L. VAN CAN ; H. B. VERBRUGGEN.** *Eng. Appl. Art. Intell.,* 1998, vol. 11, 507-515
- Proceedings of EquaDiff '99. **A. SCHUPPERT.** Extrapolarity of structured hybrid models: A key to optimization of complex processes. 2000, 1135-1151